# EUROPÄISCHE PATENTANMELDUNG

(11) **EP 0 541 976 A2**
(43) Veröffentlichungstag der Anmeldung: **19.05.1993**
(21) Anmeldenummer: 92117440.5
(22) Anmeldetag: 13.10.1992
(51) Int. Cl.: B65D 81/08

(54) **Aufblasbare Verpackung**

(30) Priorität: 14.11.1991 DE 4137436
(71) Anmelder: CLAUSS MARKISEN GMBH & CO., D-73266 Bissingen (DE)
(72) Erfinder:
(74) Vertreter: Rüger, Rudolf, Dr.-Ing.

(57) **Zusammenfassung**

Eine wiederverwendbare Verpackung (1) besteht aus zwei nach Art einer Luftmatratze miteinander verbundenen luftdichten Planen (3). Die Planen (3) begrenzen Luftkammern (22...30), die untereinander in Verbindung stehen und über eine Einfüllöffnung (31) gefüllt oder entlüftet werden können. Längs der beiden Längskanten (6, 7) der Verpackung (1) ist ein Klettverschluß (34) vorgesehen, um die Verpackung (1) um das zu verpackende Gut herum zu schließen. Nach dem Füllen der Luftkammern (22...30) ist das zu verpackende Gut in der Verpackung (1) zentriert und durch die Luftkammern (22...30) gegen Beschädigung weitgehend geschützt.

## Beschreibung

Die Erfindung betrifft eine wiederverwendbare Verpackung, insbesondere für Langgut.

Damit die Waren beim Versand bzw. während des Transportes nicht beschädigt werden, müssen sie verpackt werden. Das verwendete Verpackungsmaterial muß eine ausreichende Festigkeit aufweisen, um den erforderlichen Schutz zu gewährleisten. Eine flexible Verpackung kommt bei schweren Teilen bereits ab mehreren Kilogramm Gewicht nicht mehr in Betracht, weil der Schutz völlig unzureichend wäre. Man verwendet deswegen mehrlagige Wellpappe oder, im Falle von Langgut, Holzleisten, die längs des Langgutes verlaufen und es zum Teil einhüllen. Dabei wird bei der Verwendung von Holzleisten zur Verpackung eigentlich nicht von dem Umstand Gebrauch gemacht, daß die zum Schutz angebrachten Holzleisten die Knicksteifigkeit des Langgutes erhöhen. Das versandte Langgut, beispielsweise im Falle von Markisen, ist von sich aus steif genug, um nicht beim Versand und den dabei auftretenden Kräften geknickt zu werden.

Andererseits stellt das Verpackungsmaterial an der Seite des Empfängers in der Regel Müll dar, den er entsorgen muß. Auch hierbei ist die Verpackung von Langgut in der Entsorgung besonders schwierig, weil es zunächst auf handliche Größen zerkleinert werden muß.

Ausgehend hiervon ist es Aufgabe der Erfindung, eine wiederverwendbare Verpackung, insbesondere für Langgut zu schaffen.

Diese Aufgabe wird erfindungsgemäß durch die Verpackung mit den Merkmalen des Anspruches 1 gelöst.

Da das Langgut in aller Regel nur gegen äußere Beschädigungen geschützt werden muß, andererseits keine Gefahr besteht, daß das Langgut beim Transport knickt, genügt es, wenn die wiederverwendbare Verpackung eine dünne flexible Plane aufweist, die mit einer das Langgut umgebenden Luftkammer verbunden ist. Die Luftkammer wirkt gleichsam als Polster und verhindert, daß Schlageinwirkungen, beispielsweise infolge von auf das betreffende Langgut fallenden Gegenständen Beulen, Kratzer oder ähnliche Beschädigungen hervorrufen. Die Luftkammer gibt um das zu versendende Langgut herum genügend Volumen, das es gestattet, auftreffende Gegenstände weich abzufangen, ehe eine harte Einwirkung mit dem Langgut zustandekommt.

Da die Luftkammer durch den Verwender beliebig gefüllt und entleert werden kann, ist das Verpacken sehr einfach, denn es kann bei entleerter Luftkammer erfolgen, was das Zusammenbringen der Verpackung mit dem zu schützenden Langgut erheblich erleichtert. Der Empfänger kann die Luftkammer entleeren, so daß die Verpackung danach nur noch einen kleinen Raum in Anspruch nimmt. Er kann die Verpackung entweder selbst entsorgen, falls ihr Wert nicht allzu hoch ist oder er kann die Verpackung an seinen Lieferanten zurücksenden, wobei für den Rücktransport der Verpackung nur ein sehr geringer Raum in Anspruch genommen wird.

Je nach Verpackung kann die Plane entweder in Gestalt eines endlosen Schlauches ausgeführt sein oder als flachliegender Zuschnitt, mit dem die Kammer jeweils ortsfest verbunden ist. Der Schlauch hat den Vorteil, daß keine Naht vorhanden ist, die sich gegebenenfalls unerwühschterweise während des Transportes öffnet. Dafür ist das Einschlagen des Langgutes in die Verpackung und das Herausnehmen etwas komplizierter als im Falle einer flachliegenden Plane, die randseitig mit einem Verschluß versehen ist, da im einen Falle das Langgut in die Verpackung hineingesteckt werden muß, während im anderen Falle ein einfaches Auflegen genügt.

Die ortsfesten Luftkammern lassen sich am einfachsten dadurch erzeugen, daß auf einer Plane eine weitere Plane mit einem ähnlichen Zuschnitt oder dem gleichen Zuschnitt randseitig verbunden ist, derart, daß zwischen den Planen die Luftkammer begrenzt ist. Je nach Gestaltung und Ausführung der Verpackung kann eine Plane eine durchgehende Grundplane sein, auf der mehrere weitere Planen nebeneinanderliegend befestigt sind. Die weiteren Planen bedecken sodann nahezu die gesamte Fläche der Grundplane.

Eine sehr widerstandsfähige Verpackung ergibt sich, wenn die Plane oder die Planen aus einem Gewebe bestehen, das mit einer luftundurchlässigen biegesamen Masse getränkt oder beschichtet bzw. laminiert ist.

Die Verpackung wird besonders anschmiegsam, wenn sie mehr als eine Luftkammer enthält. Dabei richtet sich die Zahl der Luftkammern zweckmäßigerweise nach der Querschnittsgestalt des zu verpackenden Langgutes. Im Falle im wesentlichen kreiszylindrischer zu verpackender Ware genügen bei einer mit einem Verschluß versehenen Verpackung drei in Längsrichtung durchgehende oder nochmals in Querrichtung unterteilte Kammern. Die Verwendung der einzelnen Kammern hat den Vorteil der geringeren Faltenbildung an der Innenseite der Verpackung, womit sich die Gefahr vermindert, daß Druck- oder Scheuerstellen auf dem Langgut, insbesondere bei einer lackierten Fläche auftreten bzw. daß sich die Plane der Verpackung durchscheuert oder an der Falte so stark geknickt wird, daß sie alsbald luftdurchlässig wird.

Im Falle der Verwendung mehrerer Kammern sind diese zweckmäßigerweise durch kleine Kanäle untereinander strömungsmäßig verbunden, damit nach dem Füllen sämtliche Kammern denselben Druck aufweisen. Hierdurch wird das Langgut in der Verpackung sehr gut zentriert, ohne daß die Kammern übermäßig stark aufgeblasen werden müssen.

Die Flexibilität der Verpackung wird verbessert, wenn zwischen den Kammern Sollbiegestellen sind, die beispielsweise von den Schweißstellen gebildet sind, an denen die beiden Planen zwecks Erzeugung der Luftkammern miteinander stoffschlüssig verbunden sind.

Die am besten zu handhabende Ausführung des Verschlusses stellt ein Tentaklhaftverschluß dar, der den Vorteil hat, daß die Verpackung über ihre gesamte Länge verschlossen ist. Hohe lokale Zugspannung, wie sie beispielsweise bei einem Schnürverschluß auftreten, werden dadurch vermieden. Außerdem kann der Tentaklhaftverschluß leicht an den Rändern der Plane bzw. Planen angebracht werden und, da eine großflächige Verbindung besteht, braucht das einzelne Flächenelement an der Verbindungsstelle keine übermäßigen Kräfte zu übertragen.

Wenn verhindert werden soll, daß der Tentaklhaftverschluß versehentlich geöffnet wird, weil er an einer Ecke nicht vollständig geschlossen ist oder durch einen Fehler dort aufgezogen wurde, ist zweckmäßigerweise jener Streifen des Tentaklhaftverschlusses, der bei geschlossener Verpackung außen liegt, in Richtung senkrecht zum Rand eingeschlitzt. Das Aufreißen des Verschlusses endet damit zwangsläufig an dem vorgesehenen Schlitz und pflanzt sich nicht über die gesamte Länge des Verschlusses fort.

In der Zeichnung ist ein Ausführungsbeispiel des Gegenstandes der Erfindung dargestellt. Es zeigen jeweils in perspektivischer Darstellung:
- Fig. 1: die neue wiederverwendbare Verpackung im entlüfteten Zustand,
- Fig. 2: die Verpackung nach Fig. 1 im aufgeblasenen Zustand und
- Fig. 3: einen in der wiederverwendbaren Verpackung nach Fig. 1 verpackten Gegenstand, geschnitten längs der Linien III-III nach Fig. 2.

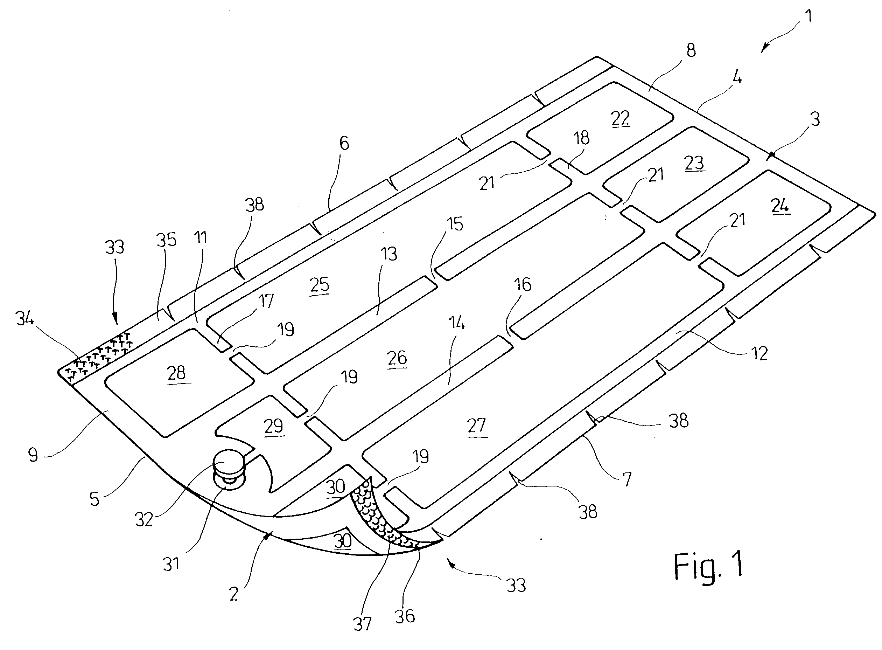

Fig. 1 zeigt im entlüfteten Zustand eine wiederverwendbare Verpackung 1. Diese wiederverwendbare Verpackung 1 ist nach Art einer Luftmatraze gestaltet und besteht aus zwei gleichen Planen 2, 3 mit rechteckigem Zuschnitt. Die Planen 2, 3 liegen deckungsgleich aufeinander und werden von zwei kurzen Seiten 4, 5 sowie zwei langen Seiten 6, 7 begrenzt, die paarweise zueinander parallel sind. Jede der beiden Planen 2, 3 besteht im Kern aus einem weitgehend reißfesten Gewebe in Leinwandbindung. Der Gewebekern ist mittels einer elastischen biegsamen Kunststoff- oder Kautschukmasse,mit der das jeweilige Gewebe beschichtet oder laminiert ist, auf Dauer luftundurchlässig gemacht.

Die beiden Planen 2, 3 sind in Streifen 8...12, die sich parallel zu den kurzen Kanten 4, 5 bzw. parallel zu den langen Kanten 6, 7 erstrecken, stoffschlüssig und luftdicht miteinander verbunden. Die stoffschlüssige Verbindung längs dieser Streifen 8...12 kann durch Schweißen oder Kleben erfolgen. Wie die Fig. 1 erkennen läßt, nehmen die Streifen 8...12, die zu der jeweiligen Kante parallel sind, nur eine geringe Fläche der beiden Planen 2, 3 ein.

Außer den an dem Rand liegenden Streifen 8...12 sind die beiden Planen 2, 3 noch längs zweier Streifen 13 und 14 miteinander verbunden, die zu den langen Kanten 6, 7 parallellaufen. Durch die Streifen 13, 14 wird die wiederverwendbare Verpackung 1 in Breitenrichtung in etwa drei gleich breite Streifen unterteilt. Jedoch sind die beiden Streifen 13 und 14 nicht durchgehend, sondern etwa in der Mitte, bezogen auf die Längserstreckung der Verpackung 1, bei 15 und 16 unterbrochen. Außerdem sind die beiden Planen 2, 3 längs zweier weiterer Streifen 17 und 18 miteinander stoffschlüssig verbunden, die parallel zu den beiden kurzen Kanten 4, 5 liegen. Die Streifen 17 und 18 sind ebenfalls nicht vollständig durchgehend, sondern sie sind zwischen den Streifen 11 und 13 bzw. 13 und 14 und schließlich zwischen dem Streifen 14 und 12 jeweils bei 19 bzw. 21 unterbrochen. Es entstehen auf diese Weise von den beiden Planen 2 und 3 begrenzte Luftkammern 22...30, die an den Unterbrechungsstellen 15, 16 sowie 19, 21 strömungsmäßig miteinander in Verbindung stehen, da die Streifen 13, 14, 17, 18, an denen die beiden Planen 2, 3 miteinander gasdicht verbunden sind, dort nicht durchgehen. Die Unterbrechungsstellen 15, 16 und 17, 21 sind somit gleichzeitig Kanäle, um die Luftkammern 22...30 miteinander zu verbinden.

Wie die weitere Beschreibung noch zeigt, bilden die Streifen 13, 14 gleichzeitig Sollbiegestellen, an denen die wiederverwendbare Verpackung 1 weitgehend ohne Behinderung durch die Luftkammern geknickt werden kann. Außerdem bilden die Streifen 13 und 14 Abstandseinheiten für die Luftkammern 22 ...30.

Im Bereich der Kammer 29 ist der Streifen 9 verbreitert, derart, daß die Kammer 29 in Längsrichtung verkürzt ist. An der verbreiterten Stelle des Streifens 9 ist auf der in Fig. 1 oben erkennbaren Plane 3 ein Einfüllstutzen 31 aufvulkanisiert, der mit einem Deckel 32 verschließbar ist. Der Einfüllstutzen 31 hat den bei Schlauchbooten üblichen Aufbau und enthält in seinem Inneren ein Rückschlagventil, das von Hand geöffnet werden kann, um die Luft aus den Kammern 22...30 abzulassen.

Die Verpackung 1 ist seitlich der beiden langen Kanten 6, 7 mit einem Klettverschluß 33 versehen. Dieser Klettverschluß 33 besteht aus einem kleine Haken 34 tragenden Streifen 35, der längs der Kante 6 an der nach außen weisenden Seite der Plane 3 befestigt ist. Ein weiterer Streifen 36 mit Schlingen oder Schlaufen 37 ist längs der Kante 7 vorgesehen. Der Streifen 36 befindet sich auf der nach außen weisenden Seite der Plane 2, d.h. bezogen auf Fig. 1 auf der Unterseite der Verpackung 1.

Beide Streifen 35 und 36 haben dieselbe Tiefe, gemessen in Richtung parallel zu der Erstreckung der kurzen Kanten 4.

Um zu verhindern, daß sich der Klettverschluß 33 über seine gesamte Länge öffnet, falls der jeweils außen liegende Streifen 35 oder 36 an einer Ecke sich abgelöst hat, sind beide Streifen 35 und 36 mit Einschnitten 38 versehen, die jeweils den gesamten Streifen 35 bzw. 36 in der gesamten Breite durchsetzen. Die Einschnitte 38 liegen parallel zu den kurzen Kanten 4 bzw. 5 und verhindern, daß sich ein Aufreißen des Klettverschlusses 33 über die gesamte Länge fortsetzt.

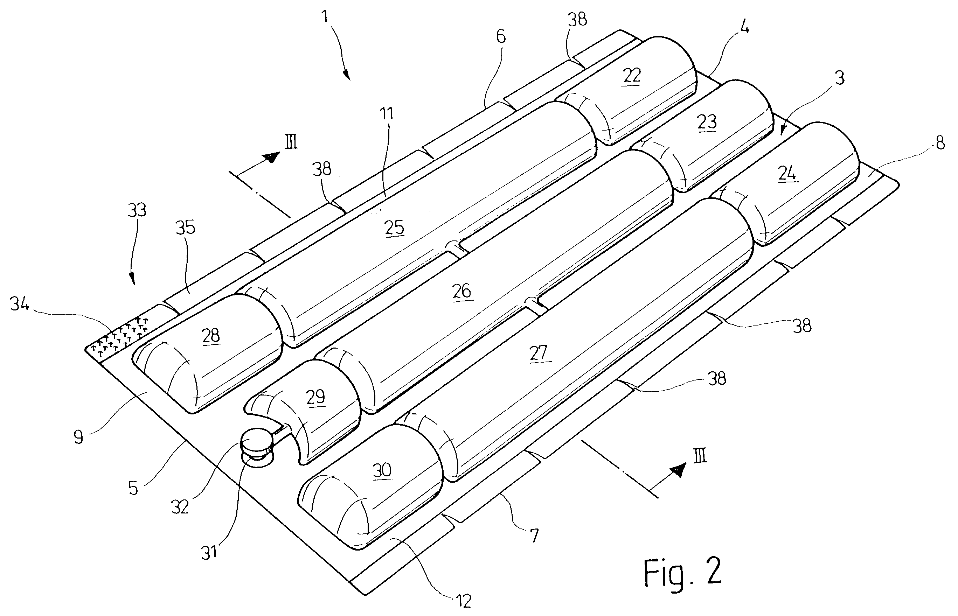

Wenn die Verpackung 1 in dem in Fig. 1 dargestellten Zustand mit Luft gefüllt wird, ergibt sich eine Anordnung, wie sie in Fig. 2 schematisiert gezeigt ist. Die Luftkammern 22...30 wölben sich vor und sind durch die Streifen 13, 14 bzw. 17, 18 voneinander beabstandet. Die Verpackung 1 behält dadurch eine gewisse Beweglichkeit, da die etwa zylindrisch sich verformenden Luftkammern 22...30 in Längsrichtung im wesentlichen knicksteif sind.

Die Verwendung der insoweit beschriebenen Verpackung 1 geschieht wie folgt: Im entlüfteten Zustand wird die Verpackung 1 auf einer ebenen Unterlage ausgebreitet, wobei der Füllstutzen 31 nach oben zeigt. Sodann wird das zu verpackende Langgut der Länge nach auf die flach ausgebreitete Verpackung 1 aufgelegt. Die Länge der Verpackung 1 im Verhältnis zu dem Langgut 41 ist derart gewählt, daß die Verpackung 1 über beide Stirnseiten des Langgutes 41 ein ausreichendes Stück übersteht. Der überstand ist mindestens so groß, daß das Langgut 41 nicht mit dem Einfüllstutzen 31 kollidiert und die andere Stirnkante gegenüber der Schmalseite 4 um 10 bis 20 cm oder mehr zurückspringt.

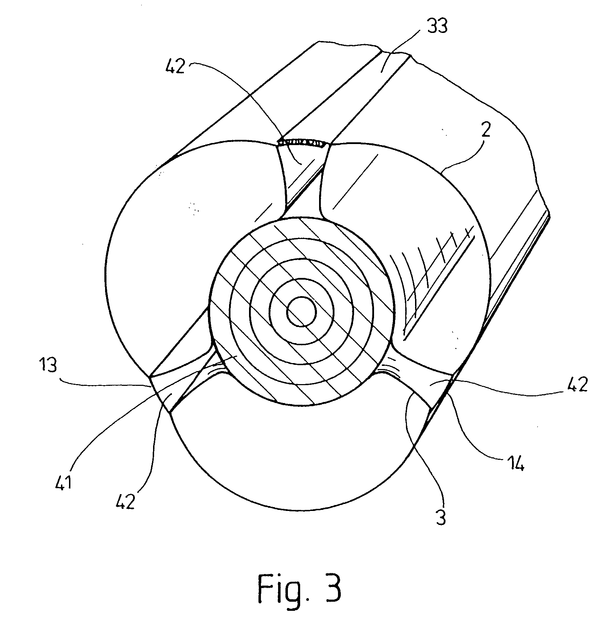

Sodann wird die Verpackung 1 mit den beiden langen Kanten 6 und 7 nach innen eingeschlagen, wodurch der die Ösen oder Schlaufen 37 aufweisende Streifen 36 in eine Lage gelangt, in der die Ösen oder Schlaufen 37 nach außen zeigen. Der andere Streifen 35 mit den Häkchen 34 kommt dadurch in eine Stellung mit nach innen weisenden Häkchen 36, die sich in dem darunter befindlichen Streifen 36 mit den Häkchen 37 verhaken können. Dadurch wird die Verpackung 1 längs der beiden Kanten 6 und 7 zu einem flach lose liegenden Schlauch geschlossen. Anschließend wird nach Abschrauben des Verschlußdeckels 32 über den Einfüllstutzen 31 Luft in die Kammern 22...30 gefüllt, wodurch sich diese aufblähen. Da sämtliche Luftkammern 22...30 miteinander kommunizieren, haben alle Luftkammern 22...30 denselben Druck und füllen sich auch gleichmäßig. Da,auf die Breite bezogen, die Luftkammern 22...30 die gleichen Abmessungen haben, blähen sie sich, wie Fig. 2 zeigt, auch gleichmäßig auf, was bedeutet, daß im Zustand mit geschlossenem Verschluß 33 das zu verpackende Langgut 31 in der Mitte der Verpackung 1 zentriert wird. Beim Aufblasen der Verpackung 1 legt sich die Plane 3 im Bereich der Luftkammern 22...30 an die Außenseite des verpackten Langgutes 31 an, wie dies der Schnitt gemäß Fig. 3 zeigt, der etwa an einer Stelle erfolgt, wie dies in Fig. 2 angedeutet ist. Die Luftkammern 22...30 füllen kissenartig den Raum zwischen der Außenumfangsfläche des Langgutes 41 und der außen liegenden Plane 2 aus. Ersichtlicherweise fungieren dabei die Streifen 13 und 14 sowie der Verschluß 33 als Sollbiegestellen, um zu verhindern, daß die Luftkammern 22...30 seitlich aneinanderstoßen und unnötig gegeneinander reiben. Vielmehr entstehen zwischen den Luftkammern weitere Hohlräume 42.

Da die Verpackung 1 länger ist als das zu verpackende Langgut 41, quellen an den Stirnseiten des Langgutes 41 die dort befindlichen Kammern 22...24 und 28...30 über die Stirnseite des Langgutes 41 über und schützen zusätzlich diese Stirnseite. Gleichzeitig verhindern sie ein Verrutschen des Langgutes 41 innerhalb der geschlossenen Verpackung.

Infolge der weichen Luftpolsterung ist das Langgut 41 im Inneren der Verpackung gegen Beschädigung von außen wirksam geschützt. Nur sehr große Schlagkräfte vermögen noch die Schutzwirkung der luftgefüllten Verpackung 1 zu überwinden. Geringere Kräfte verbeulen zwar die Außenkontur der Verpackung 1, vermögen aber nicht die äußere Plane 2 so weit einzudrücken, daß sie lokal an der inneren Plane 3 zu liegen kommt.

Auf der Seite des Empfängers wird zunächst nach Öffnen des Deckels 32 das in dem Einfüllstutzen enthaltene Rückschlagventil manuell unwirksam gemacht, um die Luft aus den Luftkammern 22...30 abzulassen. Dadurch verschwindet die in der Verpackung 1 und in dem Verschluß 33 wirksame Zugspannung und es kann nach dem Entlüften der Kammern 22...30 gefahrlos der Klettverschluß 33 geöffnet werden. Sodann kann ohre weiteres das Langgut 41 von der flachliegenden Verpackung 1 heruntergenommen werden. Die nunmehr luftleere Verpackung 1 kann ohne weiteres zusammengefaltet oder aufgerollt werden und nimmt damit ein wesentlich kleineres Volumen ein als im aufgeblasenen Zustand, wenn sie das Langgut 41 schützt. Die zusammengefaltete oder aufgerollte Verpackung 1 kann ohne große Platzbeanspruchung zum Lieferanten zurückgeschafft werden.

Wegen der im geschlossenen Zustand deckungsgleich liegenden Schlitze 38 der beiden Streifen 36 und 35 besteht keine Gefahr, daß sich der gesamte Verschluß 33 öffnet, wenn an einer Stelle in der Nähe der Stirnseite der Verpackung 1 der Verschluß aufgezogen ist. Das Aufreißen kann sich nicht über den gesamten Verschluß 33 fortsetzen, sondern wird an dem nächstgelegenen Einschnitt 38 gestoppt.

Bei dem gezeigten Ausführungsbeispiel ist lediglich ein Einfüllstutzen für sämtliche Luftkammern vorgesehen. Dadurch wird zwar die Handhabung vereinfacht, doch besteht die Gefahr, daß die Verpackung wirkungslos wird, falls irgendwo eine Leckage auftritt. Für den Fall, daß mit Perforationen der Plane unter ungünstigen Umständen zu rechnen ist, kann es zweckmäßig sein, nicht sämtliche Luftkammern untereinander strömungsmäßig zu verbinden, sondern die Luftkammern zu Gruppen zusammenzufassen und jeder Gruppe einen eigenen Einfüllstutzen zuzuordnen. Durch geeignete Verteilung der zu einer Gruppe gehörenden Luftkammern kann ein vollständiges Unwirksamwerden der Verpackung verhindert werden, wenn eine Gruppe infolge einer Perforation der außenliegenden Plane unwirksam wird.

## Patentansprüche

1. Wiederverwendbare Verpackung (1 ) insbesondere für Langgut, mit wenigstens einer Plane (2, 3) sowie wenigstens einer ortsfest mit der Plane (2, 3) verbundenen Luftkammer (22...30), die zumindest eine verschließbare Öffnung (31) zum Füllen und Entlüften der Luftkammer (22...30) aufweist und biegsame Wände aufweist.

2. Verpackung nach Anspruch 1, dadurch gekennzeichnet, daß die Plane (2, 3) die Gestalt eines Schlauches aufweist und daß die Luftkammer an der Innenseite des Schlauches vorhanden ist.

3. Verpackung nach Anspruch 1, dadurch gekennzeichnet, daß auf der Plane (2 ) eine weitere Plane (3) randseitig angebracht ist und daß die beiden Planen (2, 3) die Wände der Luftkammer (22...30) bilden.

4. Verpackung nach Anspruch 1 oder 3, dadurch gekennzeichnet, daß die Plane oder Planen (2, 3 ) als Kern jeweils ein Gewebe enthalten, das mit einer luftundurchlässigen biegsamen Masse getränkt oder beschichtet ist.

5. Verpackung nach Anspruch 1, dadurch gekennzeichnet, daß mehrere Luftkammern (22...30) vorgesehen sind.

6. Verpackung nach Anspruch 5, dadurch gekennzeichnet, daß die mehreren Luftkammern (22...30) untereinander durch Kanäle (15,16,19,21) strömungsmäßig in Verbindung stehen und daß lediglich eine verschließbare Öffnung (31) vorhanden ist.

7. Verpackung nach Anspruch 5, dadurch gekennzeichnet, daß die Luftkammern (22...30) zu Gruppen zusammengefaßt sind und jeweils die Luftkammern (22...30) einer Gruppe strömungsmäßig durch Kanäle untereinander in Verbindung stehen und daß jeder Gruppe eine eigene Öffnung zum Füllen und Entleeren zugeordnet ist.

8. Verpackung nach Anspruch 1, dadurch gekennzeichnet, daß sie zwischen benachbarten Luftkammern (22...30) eine Sollbiegestelle (13, 14, 17, 18) aufweist.

9. Verpackung nach Anspruch 3, dadurch gekennzeichnet, daß die beiden Planen (2, 3) längs der Ränder der Luftkammern (22...30) bzw. der sie untereinander verbindenden Kanäle (15, 16, 19, 21) miteinander verbunden sind.

10. Verpackung nach Anspruch 3, dadurch gekennzeichnet, daß die Verbindungsstellen (13, 14, 17, 18) zwischen den Planen (2, 3) Schweißstellen sind.

11. Verpackung nach Anspruch 3, dadurch gekennzeichnet, daß die Planen (2, 3) an den Verbindungsstellen (13, 14, 17, 18) miteinander flächig verklebt sind.

12. Verpackung nach Anspruch 3 , dadurch gekennzeichnet, daß ihre beiden Planen (2, 3) denselben Zuschnitt aufweisen.

13. Verpackung nach Anspruch 1, dadurch gekennzeichnet, daß auf der einen Plane ( 2) mehr als eine weitere Plane (3 ) befestigt ist und daß die weiteren Planen gemeinsam die erste Plane ( 2) im wesentlichen vollständig bedecken.

14. Verpackung nach Anspruch 1, dadurch gekennzeichnet, daß sie einen Verschluß (33) aufweist, der an der Plane (2, 3) bzw. Planen längs zweier einander gegenüberliegender Ränder (6, 7) oder Randbereiche (35, 36) angeordnet ist, derart, daß diese Ränder (6, 7) oder Randbereiche (35,36) miteinander verbindbar sind.

15. Verpackung nach Anspruch 14, dadurch gekennzeichnet, daß der Verschluß (33) ein Tentackelhaftverschluß ist und daß an dem einen Rand (6 ) oder Randbereich ein Streifen mit Haken (3, 4) und an dem anderen Rand (6 ) oder Randbereich ein Streifen (36) vorgesehen ist, in dem die Haken (34) einhakbar sind.

16. Verpackung nach Anspruch 14, dadurch gekennzeichnet, daß der Streifen (35) mit den Haken (34) an der einen Seite der Plane (3, 4) und der andere Streifen (36) an der gegenüberliegenden Seite der Plane (2, 3) angebracht sind, derart, daß bei geschlossenem Tentackelhaftverschluß (33) die beiden Streifen überlappen.

17. Verpackung nach Anspruch 1, dadurch gekennzeichnet, daß sie wenigestens drei Kammern (22...30) aufweist, die sich parallel nebeneinander erstrecken und die parallel zu der größten Längserstreckung der Plane (2,3) liegen.

18. Verpackung nach Anspruch 1, dadurch gekennzeichnet, daß die Kammern (22...30) durch Sollbiegestellen (13, 14, 17, 18) quergeteilt sind.

19. Verpackung nach Anspruch 1, dadurch gekennzeichnet, daß die Öffnung (31) zum Füllen und Entleeren ein Rückschlagventil enthält.
